# EUROPEAN PATENT APPLICATION

(11) **EP 3 534 302 A2**
(43) Date of publication of application: **04.09.2019**
(21) Application number: 19159901.8
(22) Date of filing: 28.02.2019
(51) Int. Cl.: G06K 19/077, G06K 19/07, E06B 5/00, B65D 19/00

(54) **RFID DEVICE, SYSTEM AND METHOD**

(30) Priority: 28.02.2018 GB 201803313
(71) Applicant: RFID Direct Ltd, Mold, Flintshire CH7 1HE (GB)
(72) Inventor: van Calker, Frits, Mold, Flintshire, CH7 5EE (GB)
(74) Representative: Harrison, Michael Robert

(57) **Abstract**

The present invention relates to an RFID tag for use with wood-based products, the RFID tag having an antenna and microchip, wherein the antenna is detuned in frequency to compensate for the wood-based products properties and/or disturbing external disturbing factors so as to match the impedance of the antenna with the impedance of the microchip.

## Description

### TECHNICAL FIELD OF THE INVENTION

The present invention relates to Radio Frequency Identification (RFID) devices and systems, in particular to RFID devices and systems used for the tracking and the identification of wood-based products during the product's entire lifecycle (i.e., covering their production, use and recycling phases), and with a focus on manufacturing methodologies during the production phase.

### BACKGROUND

In the wood and construction industries, producing wood-based products, such as doors, there is a need for an automated product identification system, tracking the products throughout their entire lifespan. The commonly used barcode technology helps to keep track of the individual products. However, reading barcodes needs a line a sight between the scanner and the printed barcode. As a result, the printed barcode must be exposed on the outside of the product and orientated towards the scanner, making it subject to, or at risk of, mechanical damage.

RFID is a generic term for several data exchange technologies which use different radio waves (frequencies) and techniques to automatically identify, for example, articles, assets, logistic units, animals and people (Welbourne, E., et al, 2009, Building the internet of things using RFID; Letho, A. et al., 2009. Passive UHF RFID in paper Industry: Challenges, Benefits and the Application Environment. IEEE Transactions on Automation Science and Engineering, 6(1), pp.66-79).

RFID scanners have the advantage that they do not require a direct line of sight, and being a radio transmitted signal, passive UHF RFID tags can be read through various materials. In materials such as wood, the RFID tag can be embedded into the wood during the entire lifespan of the product, from its manufacture to many years of operational use (Finkenzeller, K, 2003, RFID handbook: fundamentals and applications in contactless smart cards and identification, Chichester, Wiley, United Kingdom; Cheng, M., Lien, L., Tsai, M. and Chen, W. (2007). Open-building maintenance management using RFID technology. 24th International Symposium on Automation & Robotics in construction (ISARC 2007) Construction Automation Group, I.I.T. Madras; Dobkin, D.M., Wiegand, S.M., Environmental effects on RFID tag antennas, 2005).

Passive UHF RFID tags embedded in wooden products can be utilised in manufacturing processes to automate production machines, cross-matching the RFID tag to a job number, and allowing machines to set-up automatically.

RFID technologies enable the internet tracking of products by:
- providing customers with real-time data of the actual status within the production line of their procurement order;
- RFID-based warehouse management, potentially eliminating current drawbacks;
- retrace manufacturing information to enable reverse product development; and
- RFID-based calibration and annual inspection and/or audit systems, as and when required.

Passive UHF RFID tags and readers are tuned to operate at a predetermined frequency for communication set by international ISO-standards. The carrying frequency used in passive UHF RFID systems varies globally according regional regulations (GS1, EPC Global, 2012, EPC tag standards).

However, because UHF radio waves have a shorter wavelength, the signal is more likely to be attenuated. The surrounding materials affect the electromagnetic properties of the RFID tag-antennas. Compared with operating in free air, the antenna current distribution changes when embedded in wood. One factor controlling the thickness of the conductive layer in the antenna is the skin effect or penetration depth in which the current density is packed in the region near the surface of an electrical conductor.

This all affects the input impedance, which in wood, results in large impedance mismatch power loss at the antenna to microchip interface, preventing the RFID microchip from receiving sufficient power to activate. In general, the UHF RFID tag antenna contains a thin aluminium foil, on a substrate material, etched into the form of the designed antenna pattern. Antenna impedance is strongly dependent on the antenna radiation and an important parameter in antenna design, since the power delivery to the load depends crucially on the impedance matching between antenna and load impedances.

Wood is a biocomposite natural material. It is a heterogeneous and anisotropic material. From a chemical viewpoint, wood is made of two distinct types of components: low molecular weight substances and macromolecular substances. These components not only form part of the wood cell wall composition and structure, but also define its chemical properties (Rowell, R. (2005) Handbook of wood chemistry and wood composites. Boca Raton, Fla.: CRC Press).

Wood-based products contain other chemical products (such as adhesives, fire retardants, etc.) which will be part of the product's composition and play a role in its chemical properties. In general, these chemical properties are assessed regarding standards for quality control during the production, and the certification such as the pH, density, formaldehyde emission for MDF (Medium Density Fiberboard) products, etc. These have an influence on the aluminium antenna properties and influence the impedance and thus the backscatter signal.

Extractives are chemical components which form part of the wood's composition. It is possible that extractives migration and release during the manufacturing and ageing processes may have an influence on the aluminium surface of the antenna, and as a result influencing the backscatter signal.

In addition, moisture properties are one of the important wood properties. As wood is a hygroscopic material, its dimensional stability depends on its moisture content. The moisture content is defined as the amount of free and bound water in the living tree. In high humidity conditions, the swelling of wood is caused by increasing the wood cell wall volume by the addition of water molecules on the hydroxyl groups. In high humidity conditions, the water is thus existing in both the lumina and the swollen cell wall. However, the shrinkage is the reduction of wood volume, in dry conditions, when the moisture is removed under the FSP (Fiber Saturation Point). The FSP is defined as the moisture content of the cell wall when there is no free water in the voids and the cell wall is saturated with water (Rowell, 2005).

As wood and wood-based products are extensively used in construction, it is very important to be aware of their dimensional stability which may be influenced and/or disturbed with several factors, such as weathering and/or storage conditions.

In order to increase wood dimensional stability, new processes are being conducted, and a potential market is growing fast. These processes are generally referred to as modification processes. Wood modification basically appeared as an alternative for preservatives use.

The present invention is aimed at introducing passive UHF RFID technology to this fast-growing market. It is important to understand first that by embedding RFID in a modified wood product, during and after the modification process, has an influence on the backscatter signal from the antenna.

Accordingly, there is a need in the industry for there to be an RFID device and system which overcomes the above-mentioned problems with known devices and systems.

An object of the present invention is to provide an improved passive UHF RFID tag design which is reliable in specific applications, and particularly to provide an improved RFID device and system which is reliable for use with wooden articles.

### SUMMARY OF THE INVENTION

The present invention is described herein and in the claims.

According to a first aspect of the present invention there is provided an RFID tag for use with wood-based products, the RFID tag having an antenna and microchip, wherein the antenna is detuned in frequency to compensate for the wood-based products properties and/or disturbing external disturbing factors so as to match the impedance of the antenna with the impedance of the microchip.

An advantage of the present invention is that the RFID antenna is advantageously detuned in frequency response to match the deformation caused by the wood-based product properties and/or disturbing external disturbing factors.

The RFID tag may be protected with a Teflon coating to decrease the impact or influence of dimensional changes and/or moisture content.

According to a second aspect of the present invention there is provided a wooden article comprising an RFID tag according to the first aspect of the present invention. Properties of wood depend on the variation in wood species or combinations of species used in pressed wood.

The wooden article may be a stud of a wooden pallet.

The wooden article may be wooden pallet.

The wooden article may be a wooden door, such as, for example, a fire door.

The wooden article may be furniture.

The wooden article may be a construction component.

According to a third aspect of the present invention there is provided a method of manufacturing a stud of a wooden pallet, the method comprising heating a wood-pulp material to a predetermined temperature at which it is extrudable and extruding the wood-pulp material through an extruder to form the stud, wherein the wood-pulp material is extruded around a hole-forming member such as to form a hole through the stud, inserting a suitably sized RFID tag into the hole prior to the extruded stud solidifying such that upon cooling of the stud the diameter of the hole reduces to hold the RFID tag therein.

The wood-pulp material may be heated to a temperature of approximately 50°C or above. Preferably, the wood-pulp material may be heated to a temperature of approximately 60°C.

The hole-forming member advantageously comprises stainless steel.

According to a fourth aspect of the present invention there is provided a method of manufacturing a door comprising providing a core having a first and second face, at least one lip, and first and second veneer sheets, attaching the at least one lip to the edges of the core, and laminating the first and second veneers onto the first and second faces of the core, respectively, wherein an RFID tag is disposed between the first face of the core and the first veneer.

The RFID tags are advantageously provided as labels on a roll and integrated into the laminating process.

The RFID tags are advantageously detuned in frequency response to match the deformation caused by the environmental properties of the wood of the door, including lamination induced pressure, temperature and the humidity of the wood.

It is believed that an RFID device, system and method in accordance with the present invention at least addresses the problems outlined above.

It will be obvious to those skilled in the art that variations of the present invention are possible and it is intended that the present invention may be used other than as specifically described herein.

### BRIEF DESCRIPTION OF THE DRAWINGS

The present invention will now be described, by example, with reference to the following drawings, in which:
Figure 1 shows a front and an exploded top elevation, respectively, of an RFID tag according to the present invention;
Figure 2 is a schematic drawing showing a method of manufacturing a stud for a wooden pallet, according to a third aspect of the present invention; and
Figure 3 is a schematic drawing of pallet stud according to a second aspect of the present invention.

### DETAILED DESCRIPTION OF THE PREFERRED EMBODIMENTS

The present invention has adopted the approach of utilising an improved passive UHF RFID tag design which is reliable in specific applications, and particularly to provide an improved RFID device and system which is reliable for use with wooden, or modified wood, products or articles.

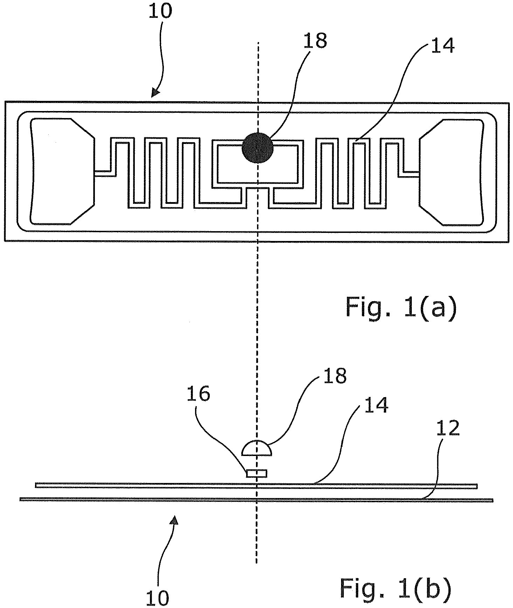

Referring now to the drawings, Figure 1 shows an RFID tag 10 of the present invention having an exposed planar substrate 12 which supports or includes an RFID circuit antenna 14. The substrate 12 being any suitable thin film substrate known to the person skilled in the art. The antenna 14, in a preferred embodiment, being a UHF RFID antenna dipole design, which is detuned to match the impedance of individual wood content, as described herein.

The RFID tag 10 having the antenna 14 and a microchip 16 which in a preferred embodiment is an RFID UHF EPCglobal Gen2 chip. This is in no way intended to be limiting as any number of different forms of microchip 16 programmed with information that uniquely identifies the tag 10 could be envisaged. On the exterior of the RFID tag 10, encapsulating the microchip 16, is a polycarbonate bead 18 which acts to absorb external pressure and temperature. In use, the antenna 14 is detuned in frequency to compensate for properties of environmental conditions of the wood with which it is used, to match the impedance of the antenna 14 with the impedance of the microchip 16. An optional Teflon layer (not shown) can be applied to the exposed planar substrate 12. The presence of such a layer reduces the exposure of the antenna 14 and microchip 16 to chemical properties thereby extending the useful life of tag 10 upon prolonged exposure to environmental changes. As will be apparent to the skilled person, a layer of other protective materials can also be used in the successful practice of the present invention.

The conductivity and thickness of the conducting layer 14 affects the radiation efficiency. The typical thickness of the aluminium foil is around 9µm. By increasing the thickness, or alternatively using copper instead, the radiation performance influences the impact on the impedance positively, reduces the losses, increases the efficiency and increases the backscatter from the tag 10.

By laminating the RFID tag 10, antenna 12 and microchip 14, with a Teflon layer of around 2µm, the aluminium antenna 14, as well as the microchip 16 and antenna bonding, is protected against chemical properties or emission (such as preservative products, adhesives, etc.), manufacturing factors (temperature, pressure and time), moisture content and dimensional stability, thus improving its durability and lifespan.

The RFID tag 10 is designed in a way that the swelling and shrinkage of wood should not disturb both of the antenna 14 and microchip 16.

The RFID tag 10 bending caused by swelling and shrinkage disturbs the antenna 14 backscatter. In that light it is important to be aware of the tag 10 design against the wood swelling. The shrinkage may also have a drawback on the backscatter signal, such as, the presence of a crack or a blow in a panel, may lead to mechanically losing the RFID tag 10 embedded therein.

Two different quantities are measured and an indication of the performance of a passive UHF RFID tag 10: namely the threshold power and backscatter signal power.

Threshold power is the minimum sufficient power to activate the IC-chip 16.

Backscattered signal power is the critical factor for the performance of an RFID tag 10. Assuming that the tag 10 has sufficient power to activate the IC-chip 16, backscattered signal power together with the reader's sensitivity are the key factors for the tag-reader read range and reliability of the reception (Björninen, T. et al., 2009. The Effect of Fabrication Method on Passive UHF RFID Tag Performance. International Journal of Antennas and Propagation, 2009, pp. 1-8).

Proper impedance matching between the antenna 14 and the microchip 16 is an important aspect of RFID system design. Integrated Circuit (IC) design and manufacturing is a large and expensive venture and therefore RFID antennas are designed for a specific ASIC available on the market. Accordingly, adding an external matching network with lumped elements is usually prohibitive in RFID tags due to cost and fabrication issues. To overcome this situation, antenna 14 is directly matched to the ASIC, which has complex impedance varying with the frequency and the input power applied to the microchip 16. Accurate knowledge of the chip 16 impedance is important for realisation of impedance matching at the intended frequency.

The RFID tag 10 design should depend on two major factors:
- the physical damage that may occur to the RFID tag 12 (antenna 14 and microchip 16) due to the wood-based product swelling and shrinkage; and
- the backscatter antenna frequency due to wood and wood-based product properties, external factors, and aging factors.

The aim of the present invention is to design a reliable passive UHF RFID device and system for specific applications within the wood industry with focus on optimising backscatter frequency. According to simulations performed by the applicant, it was been demonstrated that decreasing the impedance by 3Ω shifts the operation frequency by 10MHz.

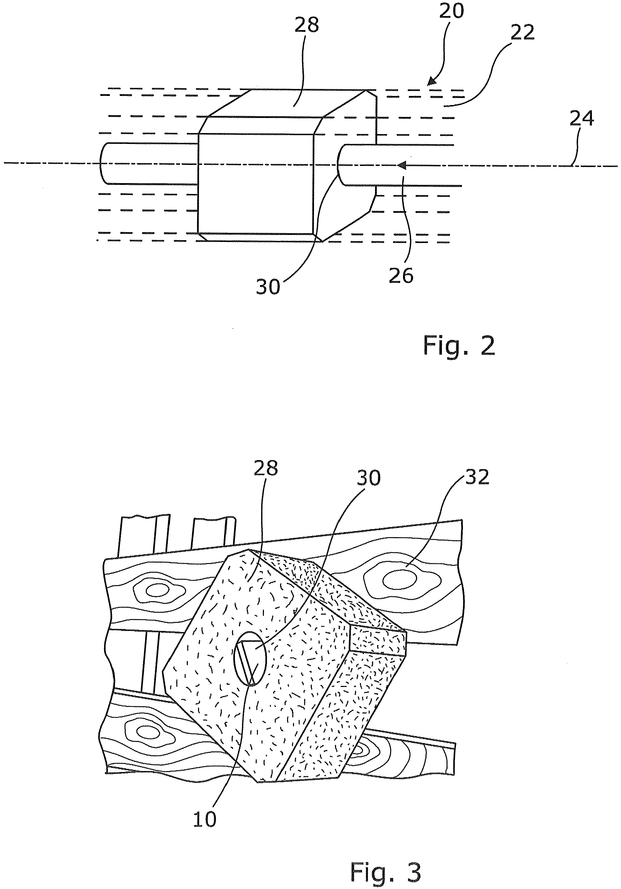

Figures 2 and 3 are illustrative of second and third aspects of the present invention and show how the RFID tag 10 can be embedded within specific wooden articles, such as a pallet stud 28. This specific example is in no way intended to be limiting as the RFID tag 10 of the present invention can be utilised with any wooden article.

Referring now to Figure 2, a method of manufacturing a pallet stud according to the present comprises providing an extruder 20 having a barrel 22 with a longitudinal axis 24. The extruder 20 has a hole-forming member 26 which made from stainless steel. The hole-forming member 26 is co-axially disposed within the barrel 22 such as to share the longitudinal axis 24.

A wood composition comprising wood pulp is fed into the barrel 22 and heated to a temperature of approximately 60°C, such that the wood composition is fluid.

The wood composition is caused to flow through the barrel 22 under pressure and around the hole-forming member 26 such as to form a pallet stud 28 having a central hole 30 formed there through, as also shown in Figure 3.

Immediately after the pallet stud 28 has been formed, an RFID tag 10 is inserted into the central hole 20. As the extruded pallet stud 28 cools the diameter of the central hole 30 reduces and thereby frictionally grips the internal surface of the central hole 30 such that the RFID tag 10 is attached to pallet stud 28. In an alternative embodiment the RFID tag 10 may be formed having a greater width such that, upon cooling of the pallet stud 28, the edges of the RFID tag 10 are at least partially embedded into the inner surface of the central hole 30.

The RFID tagged pallet stud 28 is attached to the underside of a pallet such as to provide an RFID tagged pallet 32. The RFID tag provides each pallet 32 with a unique electronically readable identification, which can be used as the transport identification of shipments. RFID identification in pallets will enable the automatic reading of logistic units conforming with the Global GS1 standards.

According to a fourth aspect of the present invention a method of manufacturing a fire door comprises providing a core having first and second faces, four lips, and first and second veneer sheets. The method involves a laminating process. The core is transported to the lipping process. A job-card gives the lip material specification in material and thickness.

The fitting process is a laminating pressure hot-melt process. After all the lips are fitted, RFID tag 10 embedding is integrated in this process. The RFID tags 10 can be supplied as labels on a roll. The labels can be peeled off manually or by a label applicator.

The RFID tag is disposed on the core before the lip fitting process is undertaken. The RFID tag is positioned in a predetermined position on the core using a positioning tool to ensure positional repeatability of the RFID tag 10 is achieved on every door.

Giving each door and door-frame an electronically readable identification related to production orders, with which the production process can be controlled and the lifecycle, inspection and maintenance recorded.

Therefore, the RFID antenna 14 in the RFID tag 10 according to the present invention is detuned in frequency response to match the deformation caused by the wooden core and veneer sheets and the pressure, humidity and temperature during the manufacturing process.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in the terms of a means for performing the disclosed function, or a method or process for attaining the disclosed result, as appropriate, separately, or in any combination of such features, can be utilised for realising the invention in diverse forms thereof.

The invention is not intended to be limited to the details of the embodiments described herein, which are described by way of example only. It will be understood that features described in relation to any particular embodiment can be featured in combination with other embodiments.

It is contemplated by the inventor that various substitutions, alterations, and modifications may be made to the invention without departing from the spirit and scope of the invention as defined by the claims.

## Claims

1. An RFID tag for use with wood-based products, the RFID tag having an antenna and microchip, wherein the antenna is detuned in frequency to compensate for the wood-based products properties and/or disturbing external disturbing factors so as to match the impedance of the antenna with the impedance of the microchip.

2. The RFID tag as claimed in claim 1, wherein the RFID tag is a passive UHF RFID tag.

3. The RFID tag as claimed in claims 1 or 2, wherein the antenna is detuned in frequency response to match the deformation caused by the wood-based product properties and/or disturbing external disturbing factors.

4. The RFID tag as claimed in any of the preceding claims, wherein the RFID tag being protected with a Teflon coating to decrease the impact or influence of dimensional changes and/or moisture content.

5. The RFID tag as claimed in any of the preceding claims, further comprising a polycarbonate bead which encapsulates the microchip and which acts to absorb external pressure and temperature.

6. The wooden article as claimed in claim 6, wherein the wooden article is a stud of a wooden pallet.

7. The wooden article as claimed in claim 6, wherein the wooden article is a wooden pallet.

8. The wooden article as claimed in claim 6, wherein the wooden article is a wooden door and/or a wooden fire door.

9. The wooden article as claimed in claim 6, wherein the wooden article is furniture.

10. The wooden article as claimed in claim 6, wherein the wooden article is a construction component.

11. A method of manufacturing a stud of a wooden pallet, the method comprising heating a wood-pulp material to a predetermined temperature at which it is extrudable and extruding the wood-pulp material through an extruder to form the stud, wherein the wood-pulp material is extruded around a hole-forming member such as to form a hole through the stud, inserting a suitably sized RFID tag into the hole prior to the extruded stud solidifying such that upon cooling of the stud the diameter of the hole reduces to hold the RFID tag therein.

12. The method as claimed in claim 11, wherein the wood-pulp material is heated to a temperature of approximately 50°C or above, and/or optionally the wood-pulp material is heated to a temperature of approximately 60°C.

13. The method as claimed in claim 11, wherein the hole-forming member comprises stainless steel.

14. A method of manufacturing a door comprising providing a core having a first and second face, at least one lip, and first and second veneer sheets, attaching the at least one lip to the edges of the core, and laminating the first and second veneers onto the first and second faces of the core, respectively, wherein an RFID tag is disposed between one of faces of the core and one of the veneer sheets.

15. The method as claimed in claim 14, wherein the RFID tags are provided as labels on a roll and integrated into the laminating process and are detuned in frequency response to match the deformation caused by the environmental properties of the wood of the door, including lamination induced pressure, temperature and the humidity of the wood.
